# EUROPEAN PATENT APPLICATION

(11) **EP 2 199 957 A1**
(43) Date of publication of application: **23.06.2010**
(21) Application number: 08172662.2
(22) Date of filing: 22.12.2008
(51) Int. Cl.: G06Q 10/00

(54) **Method and system for coordinating data records across a plurality of computing devices**

(71) Applicant: Research In Motion Limited, Waterloo, Ontario N2L 3W8 (CA)
(72) Inventor: Brown, Michael S, Waterloo Ontario N2L 5Z5 (CA); Adams, Neil P., Waterloo Ontario N2L 5Z5 (CA)
(74) Representative: MERH-IP Matias Erny Reichl Hoffmann

(57) **Abstract**

The present specification provides a method and system for coordinating data across a plurality of computing devices. In one embodiment, each computing device includes a database and personal information management application. The database maintains records that are used by the personal information management application. The personal information management application is configured to access other computing devices in order to coordinate data therebetween.

## Description

The present specification relates generally to computer science and more specifically relates to a method and system for coordinating data records across a plurality of computing devices.

The proliferation of computing devices is corresponding with ever increasing demands for functionality, which is further increasing demand for elegant and efficient management of data records within those devices and over communication networks that connect those devices with servers. The applications that are maintained and executable by such devices interact with large and complex databases, which contain unique records on different devices. There are ongoing problems when it is desired to coordinate certain records within databases respective to a plurality of different computing devices, as can be common when such devices are used for personal information management.

### GENERAL

The present specification may provide a new method and system for coordinating data records across a plurality of computing devices.

An aspect of the specification may provide a method for coordinating data records across a plurality of personal information management accounts comprising: receiving base appointment details for a proposed data record for an appointment respective to a first personal information management account; retrieving data records respective to at least one additional personal information management account; determining a common unreserved period based on an examination of the proposed data record and the data records; and, adjusting the common unreserved period based on locations associated with the proposed data record and the data records.

Each of the accounts can be maintained in a nonvolatile storage unit of different computing devices.

Each of the accounts can be maintained in a server.

The adjusting can comprise reducing the common unreserved period.

The method can further comprise: repeating the determining and the adjusting if an adjusted common unreserved period resulting from the previous iteration of the adjusting satisfies a predefined criterion.

The predefined criterion can be satisfied if the adjusted common unreserved period it is less than a predefined minimum time period.

The method can further comprise creating a record based on the proposed data record.

The method can further comprise saving the record in the first personal information management account.

The method can further comprise saving the record in the at least one additional personal information management account.

The method can further comprise generating a graphical interface comprising data representing an adjusted common unreserved period resulting from the adjusting.

The graphical interface can further comprise data representing the data records respective to the at least one additional personal information management account.

The graphical interface can further comprise data representing the proposed data record.

Another aspect of the specification may provide a computing device in accordance with any of the foregoing methods.

Another aspect of the specification may provide a server in accordance with any of the foregoing methods.

Another aspect of the specification may provide a computer readable medium maintaining a plurality of programming instructions in accordance with any of the foregoing methods.

Another aspect of the specification may provide a method for coordinating data records across a plurality of personal information management accounts comprising: receiving base appointment detail data for a proposed data record for an appointment respective to a first personal information management account; retrieving data records respective to at least one additional personal information management account; determining a common unreserved period based on an examination of said proposed data record and said data records; and, adjusting said common unreserved period based on locations associated with said proposed data record and said retrieved data records.

### BRIEF DESCRIPTION OF THE DRAWINGS

Figure 1 is a schematic representation of a system for coordinating data records across a plurality of computing devices.

Figure 2 is a block diagram of the device shown in Figure 1.

Figure 3 is a representation of a data structure for a calendar appointment record that can be stored in non-volatile storage of the device of Figure 2.

Figure 4 shows a flowchart depicting a method for coordinating data records across a plurality of computing devices.

Figure 5 shows an example set of databases and data records perspective to the computing devices of Figure 1.

Figure 6 shows an exemplary graphical interface that can be generated on the devices of Figure 1.

Figure 7 shows another exemplary graphical interface that can be generated on the devices of Figure 1.

Figure 8 shows a flowchart depicting a plurality of sub steps that can be used to implement one of the blocks in the method of Figure 4.

Figure 9 shows another exemplary graphical interface that can be generated on the devices of Figure 1.

Figure 10 shows a still further exemplary graphical interface that can be generated on the devices of Figure 1.

Figure 11 shows another exemplary graphical interface that can be generated on the devices of Figure 1.

### DESCRIPTION OF PREFERRED EMBODIMENTS

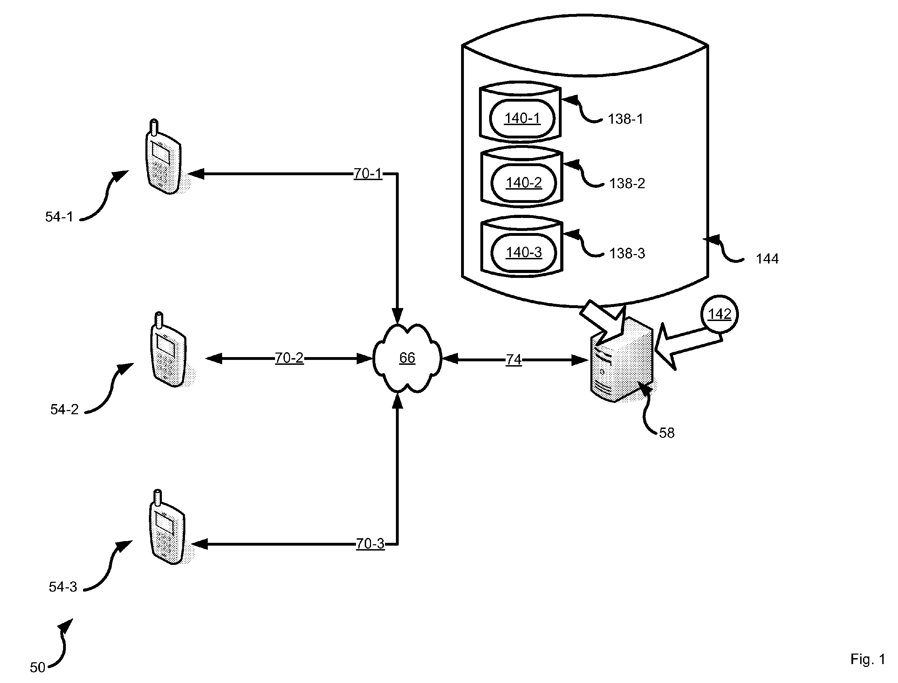

Referring now to Figure 1, a system for coordinating data records in a computing device is indicated generally at 50. In a present embodiment system 50 comprises a plurality of computing devices 54-1, 54-2, 54-3 (collectively, computing devices 54 and generically, computing device 54. This nomenclature is used elsewhere herein.). System 50 further comprises another computing device in the form of a server 58. A network 66 interconnects each of the foregoing components. A link 70 interconnects each computing device 54 with network 66. A second link 74 interconnects server 58 with network 66.

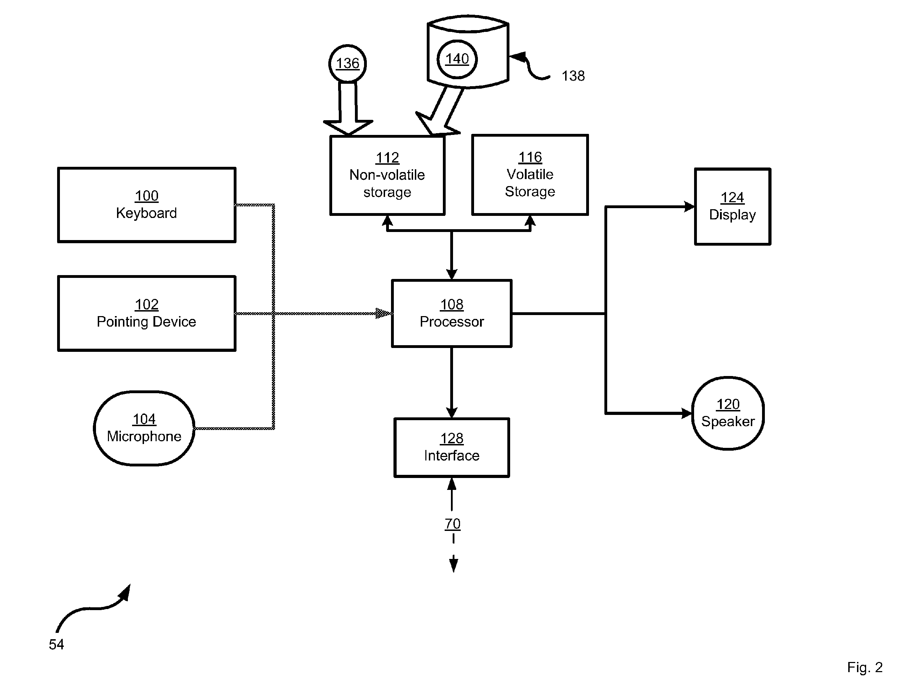

Computing device 54 can be any type of electronic device that can be used in a self-contained manner and to interact with content available over network 66. Each computing device 54 is operated by a different user. Interaction includes displaying of information on computing device 54 as well as to receive input at computing device 54 that can in turn be sent back over network 66. In a present embodiment, computing device 54 is a mobile electronic device with the combined functionality of a personal digital assistant, a cell phone, and an email paging device. Many well known cellular telephone models, or variants thereof, are suitable for the present embodiment. Referring now to Figure 2, a schematic block diagram of device 54 is shown. It should be emphasized that the structure in Figure 2 is purely exemplary, and contemplates a device that be used for both wireless voice (e.g. telephony) and wireless data (e.g. email, web browsing, text) communications. Device 54 includes a plurality of input devices which in a present embodiment includes a keyboard 100, a pointing device 102, and a microphone 104. Pointing device 102 can be implemented as a track wheel, trackball or the like. Other input devices, such as a touch screen are also contemplated. Input from keyboard 100, pointing device 102 and microphone 104 is received at a processor 108. Processor 108 is configured to communicate with a non-volatile storage unit 112 (e.g. Erase Electronic Programmable Read Only Memory ("EEPROM"), Flash Memory) and a volatile storage unit 116 (e.g. random access memory ("RAM")). Programming instructions that implement the functional teachings of device 54 as described herein are typically maintained, persistently, in non-volatile storage unit 112 and used by processor 108 which makes appropriate utilization of volatile storage 116 during the execution of such programming instructions. Variants on device 54 can include a laptop computer or a desktop computer.

Processor 108 in turn is also configured to control a speaker 120 and a display 124. Processor 108 also contains a network interface 128, which is implemented in a present embodiment as a radio configured to communicate over link 70. In general, it will be understood that interface 128 is configured to correspond with the network architecture that defines link 70. It should be understood that in general a wide variety of configurations for device 54 are contemplated.

In a present embodiment, device 54 is also configured to maintain a personal information management application, which in a present embodiment is a calendar application 136. Calendar application 136 is maintained within non-volatile storage 112. Processor 108 is configured to execute calendar application 136, receive input from keyboard 100 relative to calendar application 136, and to generate graphical interfaces on display 124 relative to calendar application 136. Device 54 is further configured to maintain at least one database 138 comprising a plurality of data records 140 within non-volatile storage 112 respective to calendar application 136. For convenience, only a single data record 140 is shown, but it is to be understood that a plurality of data records 140 are contemplated. Processor 108 is configured, when executing calendar application 136, to write updates to database 138 that correspond to inputs received via keyboard 100 or pointing device 102 or both. Updates to database 138 can comprise creation, deletion, and changes to data records 140. Processor 108 is further configured, when executing calendar application 136, to read data records 140 as part of generating graphical interfaces on display 124 respective to calendar application 136. It will now be apparent to those of skill in the art that data records 140 each comprise data representative of a calendar appointment.

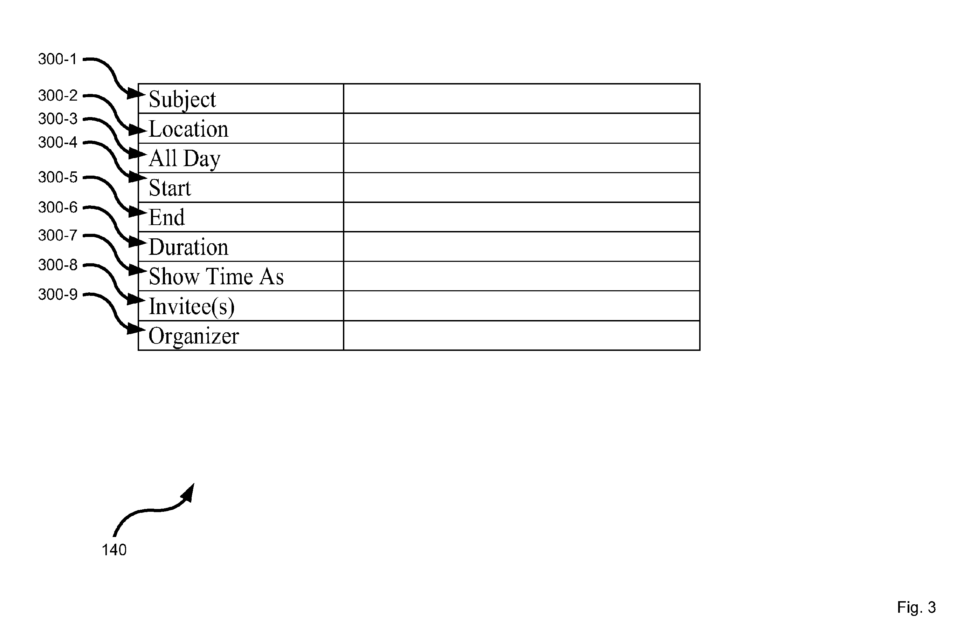

Referring now to Figure 3, an exemplary structure for data record 140 is provided in the form of an empty record 140. Data record 140 comprises a plurality of fields 300-1, 300-2, 300-3, 300-4, 300-5, 300-6, 300-7, 300-8, and 300-9. Field 300-1, labeled "Subject", represents the primary identifying information of the calendar appointment. Field 300-2, labeled "Location" represents the particular location at which the calendar appointment will occur. Field 300-3, labeled "All Day" is a flag which indicates whether or not the calendar appointment is to occur over the entire 24 hour period(s) associated with the date(s) of the calendar appointment. If field 300-3 is flagged as "yes", then the aspects of fields 300-4, 300-5, 300-6 that relate to time will become inactive and only date related data, and no time-related data, will be entered for those fields. If, however, if Field 300-3 is flagged as "no", then the aspects of fields 300-4, 300-5, and 300-6 that relate to time will become active and both time and date data will be entered for those fields. Field 300-4, labeled "start" represents data identifying the time, if appropriate, and date that the particular calendar appointment will commence. Field 300-5, labeled "end", represents data identifying the time, if appropriate, and date that the particular calendar appointment will finish. Field 300-6, labeled "duration" represents a data identifying the time the difference between the time and date relative to field 300-5 and field 300-4. (Note that device 54 can be configured, within calendar application 136, to execute a process that verifies that the data in field of 300-5 and field 300-6 correspond and that such a process can be further configured to auto calculate either field of 300-5 or field 300-6 based on the contents of the other.) Field 300-8, labeled "Invitee", indicates whether the device 54 (or personal information account, discussed further below) that was used to create the present record was also used to create one or more similar records in other accounts. Field 300-9, labeled "Organizer", is complementary to the "Invitee" field, except that field 300-9 indicates whether this particular record was created by a device (or a personal information account) that is different from the device (or the personal information account) associated with the present record 140. Other fields, such as recurrence, or reminder or both, can be included as desired.

Referring again to Figure 1, server 58 can be based on any well-known server environment including a module that houses one or more central processing units, volatile memory (e.g. random access memory), persistent memory (e.g. hard disk devices) and network interfaces to allow server 58 to communicate over network 66. For example, server 58 both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 is contemplated.

Server 58 is also be configured to execute a personal information exchange application 142, such that server 58 can operate as a Microsoft Exchange Server from Microsoft Corporation or a Blackberry Enterprise Server from Research in Motion Ltd. or the like. Thus, server 58 is configured to maintain a personal information exchange database 144, that includes personal information accounts that comprise images of databases 138 respective to each device 54.

It should now be understood that each device 54 can maintain a local database 138 and synchronize the local database 138 from time-to-time with the image of that database 138 maintained by server 58, or, in a variation of the present embodiment, each device 54 can dynamically load an image of databases 138 as needed from server 58.

It is to be understood that the nature of network 66 and links 70 and 74 associated therewith is not particularly limited and are, in general, based on any combination of architectures that will support interactions between computing device 54 and server 58. In a present embodiment network 66 itself includes the Internet as well as appropriate gateways and backhauls to links 70 and 74. Accordingly, the links 70 and 74 between network 66 and the interconnected components are complementary to functional requirements of those components.

In a present embodiment link 70 is based on core mobile network infrastructure (e.g. Global System for Mobile communications ("GSM"); Code Division Multiple Access ("CDMA"); CDMA 2000; 3G) or on wireless local area network ("WLAN") infrastructures such as the Institute for Electrical and Electronic Engineers ("IEEE") 802.11 Standard (and its variants) or Bluetooth or the like or hybrids thereof. Note that in an exemplary variation of system 50 it is contemplated that computing device 54 could be other types of computing devices whereby link 70 is a wired connection. System 50 also includes link 74 which can be based on a T1, T3, 03 or any other suitable wired or wireless connection between server 58 and network 66.

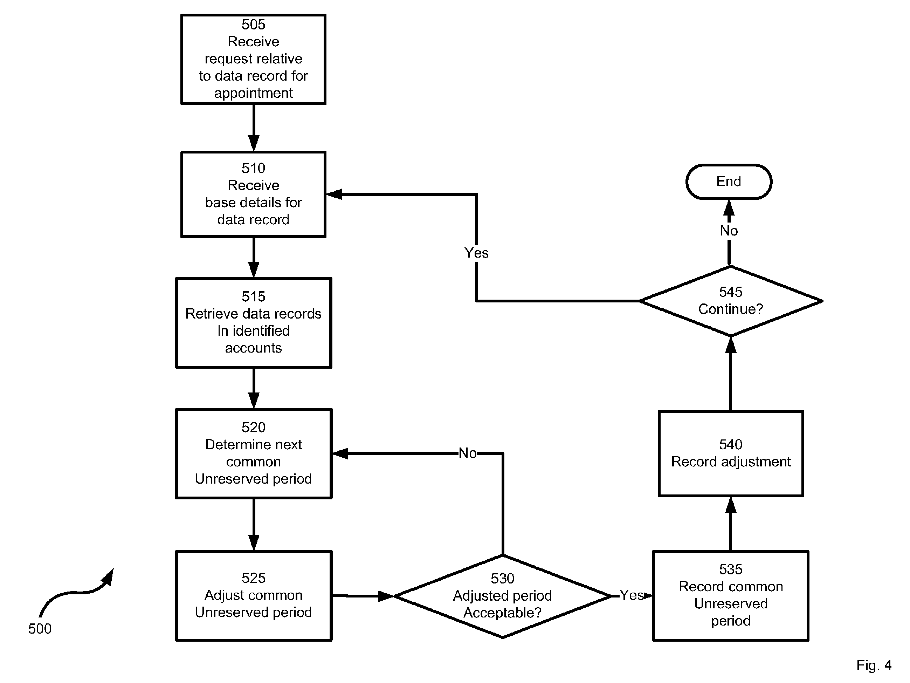

Referring now to Figure 4, a method for data record coordination is represented in the form of a flowchart and indicated generally at 500. In a present embodiment, method 500 can be performed using application 136 on device 54, interacting with the other elements in system 50, but it is to be understood that variations on method 500 and system 50 are contemplated.

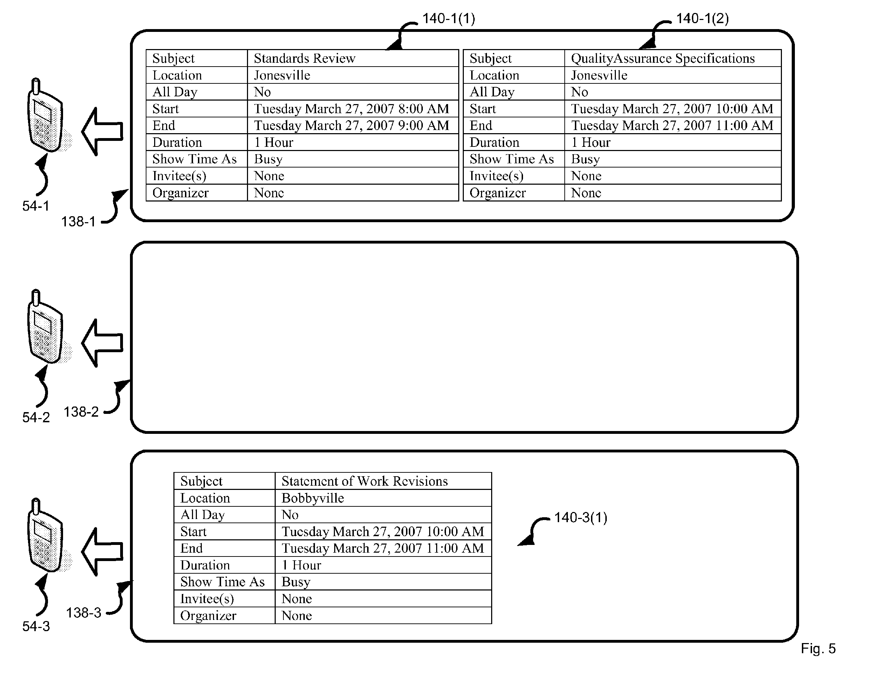

Prior to explaining method 500, certain assumptions will be made about system 50. Those assumptions are shown in Figure 5, which shows exemplary portions of databases 138-1, 138-2, and 138-3. The portions of those databases 138 relate to the morning of Tuesday, March 27, 2007. Database 138-1, respective to device 54-1, includes a first record 140-1(1), and a second record 140-1(2). First record 140-1(1) shows a reserved time period between 8:00 a.m. and 9:00 a.m. on Tuesday, March 27, 2007 in the town of Jonesville. Second record 140-1(2) shows a reserved time period between 10:00 a.m. and 11:00 a.m. on Tuesday, March 27, 2007 also in the town of Jonesville. Database 138-2, respective to device 54-2, includes no records relative to the morning of Tuesday, March 27, 2007. Database 138-3, respective to device 54-3, includes one record 140-3(1). Record 140-3(1) shows a reserved time period between 10:00 a.m. and 11:00 a.m. in the town of Bobbyville.

As part of explaining method 500, it will also be assumed that device 54-2, is being used to create a data record relative to the morning of Tuesday, March 27, 2007.

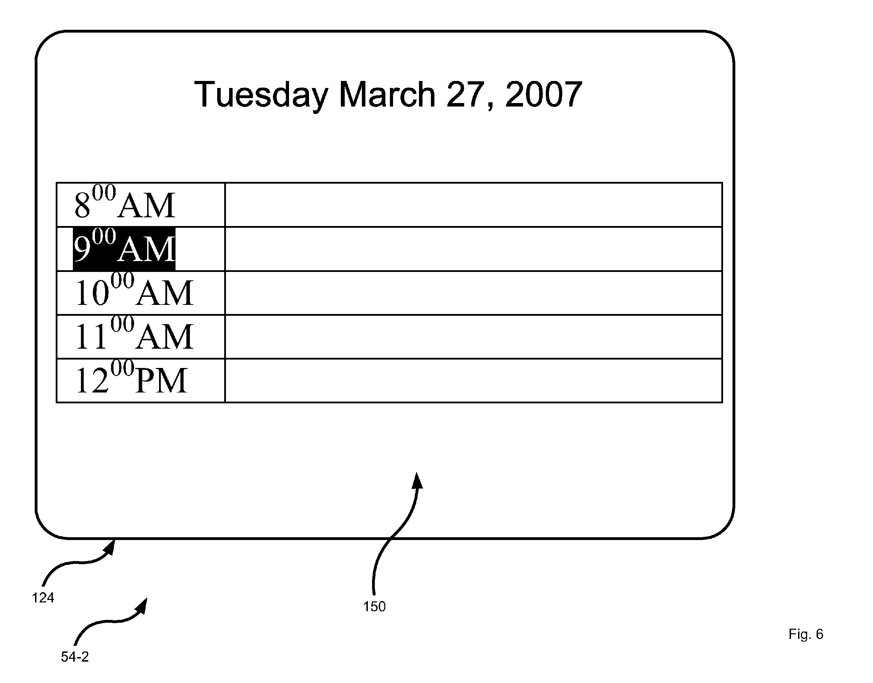

Beginning at block 505, a request is received relative to a data record for a particular calendar appointment. The request can be to create a new calendar appointment or to modify an existing calendar appointment. Such a request can be received at processor 108, via input received from keyboard 100 or pointing device 102 or both. Figure 6 can assist in illustrating how the request at block 505 can be generated in the context of a request to create a new calendar appointment. In Figure 6, a graphical interface 150 is shown on display 124 of device 54-2. Graphical interface 150 shows an empty calendar for the date Tuesday, March 27, 2007. Graphical interface 150 can be generated by processor 106 executing calendar application 150 so as to control display 124. The time period of "9:00 a.m." is shown as highlighted on graphical interface 150. Such highlighting can be effected via pointing device 102 interacting with programming instructions within calendar application 136 that are configured to be responsive to pointing device 102. Further depression of, for example, the "enter" key on the keyboard 100 can ultimately complete performance of block 505. Other means of effecting block 505 will now occur to those of skill in the art.

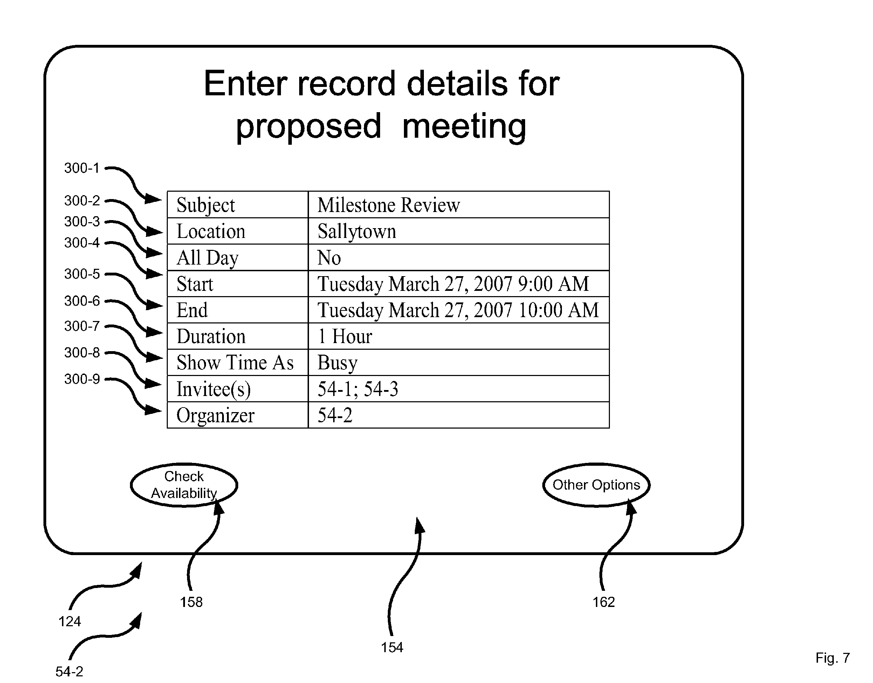

At block 510, base details for the data record are received. Figure 6 shows another exemplary graphical interface 154 that can be generated by processor 106 on display 124 of device 54-2 as part of the performance of block 510. Graphical interface 154 shows the record structure of record 140 in a format that allows input respective to each field. Exemplary input is provided in each field to represent the reception of base details for the data record. In Figure 6, Field 1 shows the subject "Milestone Review"; Field 2 shows the location, "Sallytown"; Field 3 shows that the event is not taking place over an entire day; Field 4 shows that the proposed Start time of the proposed meeting is Tuesday March 27, 2007 at 9:00AM; Field 5 shows that the proposed End time for the proposed meeting is Tuesday March 27, 2008 at 10:00 AM; Field 6 shows that that the duration for the proposed meeting is one hour; Field 7 shows that that the time for the meeting should be shown on graphical interfaces as "busy"; Field 8 shows that the databases 138 associated with devices 54-1 and 54-3 are to be consulted as the records for those database 138 may also be updated according to the details provided in the other fields 300-1 through 300-7 shown in Figure 7; Field 9 shows that the proposed meeting is being organized using device 54-2.

In the present example, to proceed from block 510 to block 515, input is received via virtual-button 158 on graphical interface 154 of Figure 7. Virtual-button 158, labeled as "check availability" in Figure 7, represents a request to determine if the data records 140 in databases 138 associated with the devices indicated in field 300-8 can accommodate a new data record that includes the contents of fields 300-1 through 300-7. (Also note that graphical interface 154 of Figure 7 includes a second virtual button 162, labeled as "other options". Selection of virtual button 162 can generate a list of menu items that include saving and exiting, or simply exiting graphical interface 154. Note that the functioning of virtual button 162 is not incorporated into method 500. Those skilled in the art will appreciate how method 500 can be modified in order to accommodate the functionality of virtual button 162.)

At block 515, data records (or copies thereof, or relevant portions thereof) are retrieved from the identified accounts. Continuing with the present example, the identified accounts referenced in block 515 are derived from the contents of Field 300-8 on graphical interface 154 of Figure 7. Note that Field 300-8 of graphical interface 154 identifies the accounts associated with both device 54-1 and device 54-3. As part of block 515, calendar application 136 on device 54-2 will examine the contents of database 138-1 and database 138-3. Continuing with the present example, application 136 and device 54-2 will obtain copies of data record 140-1(1) and data record 140-1 (2), and the data record 140-3(1).

At block 520, the next common unreserved period will be determined. Block 520 is performed based on an examination of the base details received at block 510 and the contents of the data records retrieved at block 515. Again, according to the present example, a determination at block 528 will determine that the proposed a time period, namely Monday, March 26, 2007 between 9:00 a.m. and 10:00 a.m. is a common unreserved period in all databases 138. (It will now be apparent that the example is simplified and that, in variations of method 500, the result of performance of block 520 could determine that the time period proposed at block 510 is not a common unreserved time period, and that block 520 could result in an alternative suggested proposed time that is in fact common.)

At block 525, the common unreserved time period from block 520 is adjusted.

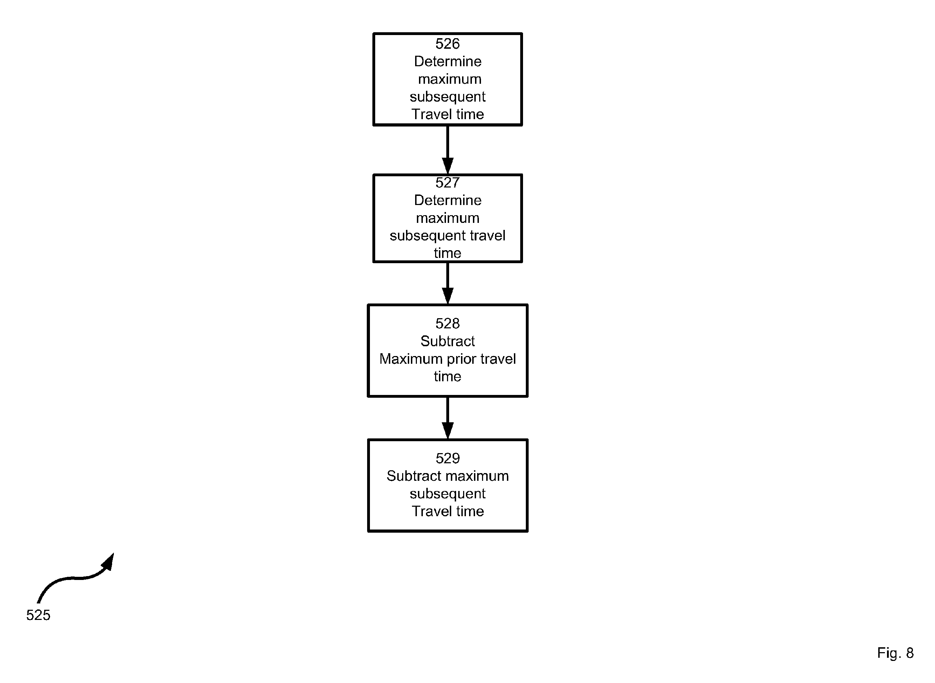

Figure 8 provides an example of how block 525 can be effected as four sub-blocks. At block 526 a prior maximum travel time is determined. Block 526 involves examining the location fields (i.e. field 300-2) of the data records 140 that have end times which are prior to the start time of the basic data received at block 510. These location fields are compared with the contents of the location field received at block 510 in order to ascertain the maximum travel time just prior to the proposed meeting from block 510. Continuing with the present example, it will be noted that record 140-1(1) and record 140-3(1) satisfy this criteria, but that 140-1 (2) does not satisfy this criteria. It will be further noted that the location field in record 140-1(1) contains the data "Jonesville", while the location field in record 140-1(3) contains the data "Bobbyville". It will be further noted that the location field from graphical interface 154 contains the data "Sallytown". Therefore, block 526 will comprise determining a first travel time from Jonesville to Sallytown, and a second travel time from a Bobbyville to Sallytown, and then the selecting the greater of the first and second travel times. (Note that, notwithstanding the present example, the determination at block 526 can involve as any number of records 140, including zero.) Assume, for the sake of explaining the present embodiment, that the travel time from Jonesville to Sallytown is ten minutes and the travel time from Bobbyville to Sallytown is twenty minutes, and accordingly that result of the determination at block 526 will be that the travel time from Bobbyville to Sallytown is the maximum prior travel time, that maximum prior travel time being twenty minutes.

At block 527 a maximum subsequent travel time is determined. Block 527 is similar in concept to 526 except that the time that is being ascertained relates to time that occurs after the proposed meeting from block 510. Block 527 involves examining the location fields (i.e. field 300-2) of the data records 140 that have start times which are subsequent to the end time of the basic data received at block 510. These location fields are compared with the contents of the location field received at block 510 in order to ascertain the maximum travel time just prior to the proposed meeting from block 510. Continuing with the present example, it will be noted that record 140-1(2) satisfies this criteria, but that and record 140-1(1) and record 140-3(1) does not satisfy this criteria. It will be further noted that the location field in record 140-1(2) contains the data "Jonesville". It will be further noted that the location field from graphical interface 154 contains the data "Sallytown". Therefore, block 527 will comprise determining a travel time from Sallytown to Jonesville (Note that, notwithstanding the present example, the determination at block 526 can involve as any number of records 140, including zero.) Continuing with previous assumptions, recall that the travel time from Sallytown to Jonesville is ten minutes, and accordingly the result of the determination at block 527 will be that the maximum subsequent travel time news ten minutes.

It should be understood that the means by which the travel times are determined is not particularly limited. For example, known mapping applications such as MapQuest or Google maps can be employed.

At block 528, the maximum travel time determined at block 526 will be subtracted from the beginning of the common unreserved time period determined at block 520. Continuing with the present example, and the adjusted common unreserved time period will be set to having a start time of 9:20 a.m. instead of 9:00 a.m.

At block 529, of the maximum travel time determined at block 527 will be subtracted from the end of the common unreserved time period determined at block 520. Continuing with the present example, and the adjusted common unreserved time period will be set to having an end time of 9:50 a.m. instead of 10:00 a.m.

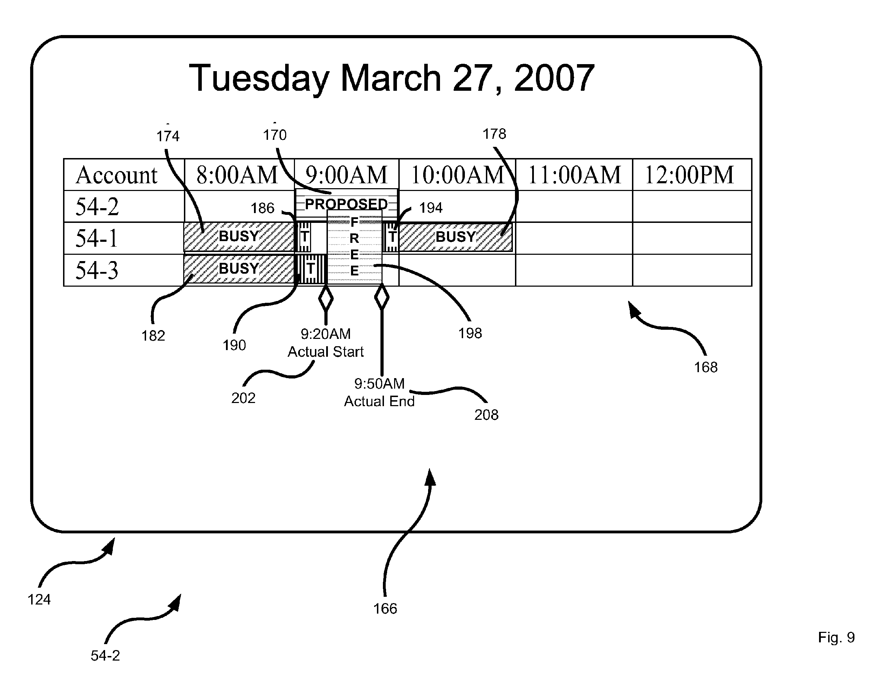

Figure 9 shows a graphical interface 166 that can be generated on display 124 of device 54-2 as part of the performance of block 525. Graphical interface 166 illustrates a specific example being discussed herein. Graphical interface 166 is comprised of a table 168, wherein the columns represent different times of day and the rows represent the relevant contents of databases 138 respective to different accounts. Graphical interface 166 comprises a header row which identifies various times of day corresponding to Tuesday, March 27, 2007. The first row references the account associated with client device 54-2, and shows that database 138-2 has no contents during the time period of 8:00 a.m. to 12:00 p.m. on Tuesday, March 27, 2007. However, the first row does include a proposed time block 170 that corresponds to the proposed start time and end time provided in graphical interface 154 in Figure 7.

The second row of table 168 references the account associated with client device 54-1, and shows that database 138-1 has records whereby the time period between 8:00 a.m. and 9:00 a.m. is busy, and that the time period between 10:00 a.m. and 11:00 a.m. is also busy which corresponds with the contents of record 140-1(1) and record 140-1(2) respectively. Accordingly the time period between 8:00 am and 9:00 a.m. in the second row of table 168 includes a first busy time block 174. Likewise the time period between 10:00 a.m. and 11:00 a.m. in the second row of table 168 includes a second busy time block 178.

The third row of table 168 references the account associated with client device 54-3, and shows that database 138-3 has a record whereby the time period between 8:00 a.m. and 9:00 a.m. is busy, which corresponds with the contents of record 140-3(1). Accordingly the time period between 8:00 a.m. and 9:00 a.m. in the third row of table 168 includes a third busy time block 182.

Those skilled in the art will now recognize that busy time block 174, busy time block 178 and busy time block 182 corresponds with the data received at block 515 and method 500.

The second row of table 168 also comprises a first travel time block 186 that occupies the time period from 9:00 a.m. to 9:10 a.m., which reflects the travel time from Jonesville to Sallytown. The third row of table 168 also comprises a second travel time block 190 that occupies a time period from 9:00 a.m. to 9:20 a.m., which reflects the travel time from Bobbyville to Sallytown. Note that the contents of time block 186 and time block 190 were ascertained as part of the performance of block 526 of Figure 8.

The second row of table 168 also comprises a third travel time block 194 that occupies the time period from 9:50 a.m. to 10:00 a.m., which reflects the travel time from Sallytown to Jonesville. Note that the contents of time block 194 were ascertained as part of the performance of block 527 of Figure 8.

Table 168 also comprises a free time block 198 that spans all three rows within the 9:20 a.m. and 9:50 a.m. time period. Free time block 198 represents the adjusted common unreserved time period as ascertained as a result of the performance of block 525. Graphical interface 166 also comprises an actual start time indicator 202 and an actual end time indicator 208. Actual start time indicator 202 represents the result of the performance of block 528 of Figure 8, while actual end time indicator represents the result of the performance of block 529 of Figure 8.

Having completed block 525, and referring again to Figure 4, method 500 will advance from block 525 to block 530, at which point a determination will be made as to whether the adjusted time period from block 525 is acceptable. The determination at block 530 may be done in a variety of ways. For example, the determination at block 530 may be automatic. An automatic determination may be made that the adjusted common time period is unacceptable, if the adjusted common time period is less than a predefined minimum. For example, if the adjusted common time period is less than fifteen minutes, then the adjusted common time period can be automatically rejected resulting in a "no" determination at block 530. Alternatively, or in addition, the determination at block 530 may be done manually. A manual determination may be made by way of receiving input from the keyboard 100 or pointing device 102 representing an acceptance or rejection of the adjusted common time period.

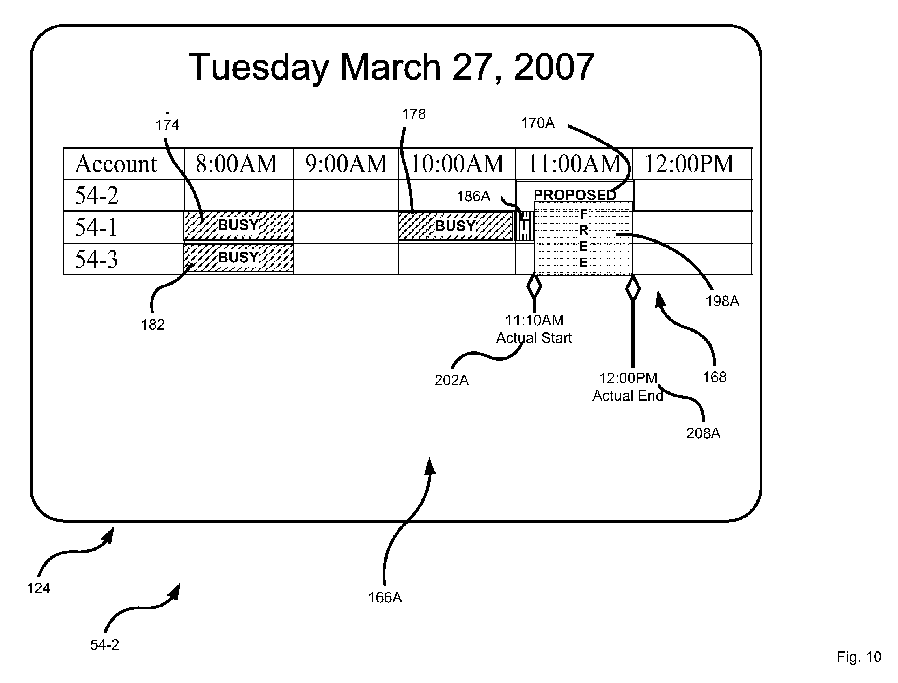

Where a "no" determination is made at block 530, method 500 returns to block 520 and a determination is made as to the next common unreserved period. At this point, the determined next common unreserved period can also be effected automatically or manually or through combination of both. An operation to make an automatic determination can be incorporated into calendar application 136, which will ascertain other time periods that are not present in the records 140 of each database 138, such other time periods being proximal to the original proposed time period from block 510. An operation to make a manual determination can also be incorporated into calendar application 136, which can be based on receiving different input into fields 300-4 and 300-5 on graphical interface 154 of Figure 7. Another operation to make a manual determination, also incorporated into calendar application 136 can be based on incorporating interactive features into graphical interface 166, whereby, for example, proposed time block 170 can be "dragged and dropped" to another time period in table 168. Figure 10 illustrates the results of such a manual determination, as Figure 10 shows a graphical interface 166A (being an update to graphical interface 166), whereby proposed time block 170A (a result of moving proposed time block 170) is within the time period 11:00 a.m. to 12:00 p.m. Free time block 198A (a result of re-performance of blocks 520 and 525) now occupies the time period between 11:10 a.m. and 12:00 p.m. Actual start time indicator 202A now indicates 11:10 a.m., representing the result of the re-performance of block 528 of Figure 8, while actual end time indicator 208A now indicates 12:00 p.m., representing the result of the re-performance of block 529 of Figure 8. Graphical interface 166A also includes a single travel block 186A, reflecting of the travel time between Jonesville and Sallytown.

Where a "yes" determination is made at block 530, then method 500 advances to block 535. At block 535 a record is made of the common unreserved period ascertained at block 520. Block 535 can be effected by creating a record 140 within device 54-2 that corresponds with the contents of graphical interface 166 (or graphical interface 166A, as desired). The record created at block 535 can be stored within database 138-2 within nonvolatile storage 112 or within database 144 on server 58 or both. The record created at block 535 can also be stored within databases 138-1 and 138-3, subject to any verification procedures respective to each of those databases 138 that may be required in order to affect such an update.

At block 540, a record can be made of the adjustment that was ascertained at block 525. Such an adjustment can be stored within any one or all of databases 138, either within nonvolatile storage 112 respective to each device 54, or within database 144 on server 58.

At block 545, a determination is made as to whether or not to continue with method 500. A "yes" determination would be made in the event that additional calendar appointments are to be provided, in which case method 500 would cycle back to block 510. A "no" determination results in the termination of method 500.

(While not shown in Figure 4, it will be understood that device 54 can be configured so that performance of method 500 can be interrupted or terminated at any time.)

Variations, combinations or subsets or all of the foregoing of the embodiments are contemplated. The present specification can also provide certain advantages. For example, travel times can be taken into consideration in an organizer's calendar application, without requiring the invitee's calendar applications or databases to maintain travel times.

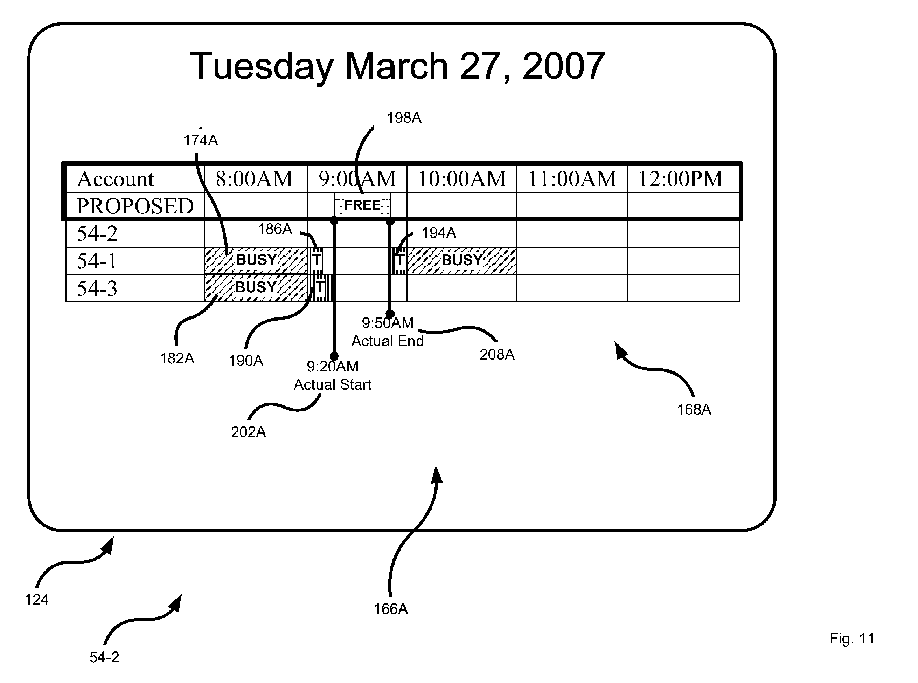

As an example of another variation, Figure 11 shows an alternative graphical interface 166A that can be generated on display 124 of device 54-2 as part of the performance of block 525. Graphical interface 166A is a variation on graphical interface 166 of Figure 9, and therefore like elements in Figure 11 bear like reference characters to their counterparts in Figure 9, except followed the suffix "A". Graphical interface 166A is comprised of a table 168A, wherein the columns represent different times of day and the rows represent the relevant contents of databases 138A respective to different accounts. Like graphical interface 166, graphical interface 166A comprises a first header row which identifies various times of day corresponding to Tuesday, March 27, 2007. In contrast to graphical interface 166, however, is that graphical interface 166A also includes a second row that reflects the free time block 198A of the proposed time window. The next row references the account associated with client device 54-2, and shows that database 138-2 has no contents during the time period of 8:00 a.m. to 12:00 p.m. on Tuesday, March 27, 2007. The remaining rows in table 168A are substantially the same as the remaining rows in table 168. In interface 166A, the "proposed" time information is included in a single row and shows an aggregate of the "free" time information from all of the accounts. Thus, in interface 166A, the busy and travel times associated with account 54-2 can also be shown in isolation from the free time block 198A.

## Claims

1. A method for coordinating data records across a plurality of personal information management accounts comprising:
receiving base appointment detail data for a proposed data record for an appointment respective to a first personal information management account;
retrieving data records respective to at least one additional personal information management account;
determining a common unreserved period based on an examination of said proposed data record and said data records; and,
adjusting said common unreserved period based on locations associated with said proposed data record and said retrieved data records.

2. The method of claim 1 wherein at least one of said accounts is maintained in a nonvolatile storage unit of different computing devices.

3. The method of claim 1 wherein at least one of said accounts is maintained in a server.

4. The method of any one of claims 1 to 3 wherein said adjusting comprises reducing said common unreserved period.

5. The method of any one of claims 1 to 5 further comprising:
repeating said determining and said adjusting if an adjusted common unreserved period resulting from a previous performance of said adjusting satisfies a predefined criterion.

6. The method of claim 5 wherein said predefined criterion is satisfied if said adjusted common unreserved period is less than a predefined minimum time period.

7. The method of any one of claims 1 to 6 further comprising creating an appointment data record based on said received base appointment detail data for said proposed data record.

8. The method of claim 7 further comprising either saving said appointment data record in said first personal information management account, or saving said appointment record in said at least one additional personal information management account.

9. The method of claim any one of claims 1 to 8 further comprising generating a graphical interface comprising data representing an adjusted common unreserved period resulting from said adjusting.

10. The method of claim 9 wherein said graphical interface further comprises data representing said proposed data record.

11. The method of claim 9 wherein said graphical interface further comprises data representing said data records respective to said at least one additional personal information management account.

12. A computing device comprising:
a processor;
storage connectable to said processor;
an input device connected to said processor; said processor configured to receive said data representing base appointment details via said input device,
said processor further configured to perform the steps of any of the methods of claims 1 to 11.

13. The computing device of claim 12 wherein said computing device is a mobile electronic device.

14. The computing device of claim 12 wherein said storage comprises at least one of non-volatile storage and volatile storage locally connectable to said processor for maintaining said first personal information management account.

15. A computer readable medium having computer-readable code embodied therein for execution by a processor in a computing device, for causing said device to implement the steps of the method of any one of claims 1 to 11.

## Amended claims

### Amended claims in accordance with Rule 137(2) EPC.

**1.** A method in a computing system for coordinating data records across a plurality of personal information management accounts comprising:
receiving base appointment detail data for a proposed data record (170) for an appointment corresponding to a first personal information management account (138-1);
retrieving data records (140-2, 140-3) corresponding to at least one additional personal information management account (138-2, 138-3);
determining a common unreserved period (198) based on an examination of said proposed data record (170) and said data records (140-2, 140-3);
adjusting said common unreserved period (198) based on locations associated with said proposed data record (170) and said retrieved data records (140-2, 140-3);
controlling a display (124) on a computing device to generate a table (168), said table (168) comprising a plurality of columns representing different times and plurality of rows corresponding to contemporaneous portions of each said personal information management accounts (138-1, 138-2, 138-3);
controlling said display (124) to generate a graphical representation of said proposed data record (170) in association with said row corresponding to said first personal information management account (138-1);
controlling said display (124) to generate a graphical representation of said common unreserved period (198); said second graphical representation spanning the rows corresponding to said personal information management accounts (138-1).

**2.** The method of claim 1 further comprising:
receiving via an input device (100, 102) a selection of said proposed data record (170) within said table (168);
receiving via said input device (100, 102) an instruction to drag-and-drop said proposed data record (170) to another column in said table (168);
determining a new proposed data record (170A) based on a time associated with said another column;
retrieving additional data records (140-2, 140-3) corresponding to said at least one additional personal information management account (138-2, 138-3);
determining another common unreserved period (198A) based on an examination of said new proposed data record (170A) and said additional data records (140-2, 140-3);
adjusting said another common unreserved period (198A) based on locations associated with said new proposed data record (170A) and said additional data records (140-2, 140-3); and,
controlling said display (124) to generate another graphical representation of said another common unreserved period (198A) spanning the rows corresponding to said personal information management accounts (138-1).

**3.** The method of claim 1 wherein at least one of said accounts is maintained in a nonvolatile storage unit of different computing devices.

**4.** The method of claim 1 or claim 2 wherein at least one of said accounts is maintained in a server.

**5.** The method of any one of claims 1, 3 or 4 wherein said adjusting comprises reducing said common unreserved period (198).

**6.** The method of any one of claims 1 - 5 further comprising:
repeating said determining and said adjusting if an adjusted common unreserved period (198) resulting from a previous performance of said adjusting satisfies a predefined criterion.

**7.** The method of claim 6 wherein said predefined criterion is satisfied if said adjusted common unreserved period (198) is less than a predefined minimum time period.

**8.** The method of any one of claims 1 to 7 further comprising creating an appointment data record based on said received base appointment detail data for said proposed data record (170).

**9.** The method of claim 8 further comprising saving said appointment data record in said first personal information management account (138-1).

**10.** The method of claim 8 further comprising saving said appointment record in said at least one additional personal information management account (138-1, 138-2).

**11.** A computing device comprising:
a processor;
storage connectable to said processor;
an input device connected to said processor; said processor configured to receive said data representing base appointment details via said input device,
said processor further configured to perform any of the methods of claims 1-11.

**12.** The computing device of claim 11 wherein said computing device is a mobile electronic device.

**13.** The computing device of claim 12 wherein said storage comprises at least one of non-volatile storage and volatile storage locally connectable to said processor for maintaining said first personal information management account.

**14.** A computer readable storage medium maintaining a plurality of programming instructions In accordance with any one of claims 1-10.
